# FASCICULE DE BREVET EUROPEEN

(11) **EP 0 718 946 B1**
(45) Date de publication et mention de la délivrance du brevet: **08.07.1998**
(21) Numéro de dépôt: 95402826.2
(22) Date de dépôt: 15.12.1995
(51) Int. Cl.: H02G 3/26, H02G 3/04, F16L 3/22

(54) **Système et procédé de fixation de lignes**
System und Verfahren zur Befestigung von Leitungen
System and process for fixing lines

(30) Priorité: 21.12.1994 FR 9415407
(43) Date de publication de la demande: 26.06.1996
(73) Titulaire: GEC ALSTHOM TRANSPORT SA, 75016 Paris (FR)
(72) Inventeur: Boucot, Bernard, F-90300 Sermamagny (FR)
(74) Mandataire: Gosse, Michel

(56) Documents cités:
- EP-A- 0 428 896
- DE-A- 1 590 764
- US-A- 4 046 957

## Description

La présente invention concerne les moyens de cheminement et de fixation de câbles, notamment pour lignes de transport d'énergie ou de données, en général, et porte, plus particulièrement, sur un système et un procédé de fixation de lignes.

Le cheminement des lignes sur chemins de câbles est une solution couramment utilisée dans tous les domaines techniques.

Le termes générique "lignes" désigne, dans l'ensemble de la présente description, tous moyens électriques, optiques, électromagnétiques ..., de transport d'énergie ou de données, comme par exemple les câbles, les torons ou les faisceaux.

Les lignes bridées par colliers sont soumises à des contraintes thermiques et dynamiques importantes, du fait par exemple des vibrations dans le matériel roulant.

Dans le cas de surcharges brusques, des efforts électrodynamiques se développent entre certaines lignes ou plus précisément entre certains conducteurs.

Ces phénomènes engendrent des déplacements dans le temps et peuvent être la cause de défauts tels que:
- une dégradation du serrage des lignes,
- un échauffement individuel plus important causé par la réduction de la lame d'air entre câbles, entraînant une destruction prématurée des isolants,
- des échauffements mutuels dus au rapprochement des éléments, et
- des perturbations électromagnétiques dues à l'induction mutuelle.

Il est connu du document EP 0 428 896 un système de fixation de lignes de transport d'énergie.

Ce document décrit un système de fixation de lignes de transport d'énergie comprenant au moins une plaque de base présentant un arrangement ou un motif de trous composé de trous traversants formant des rangées.

Le système de fixation de lignes de transport d'énergie décrit comprend également des éléments de maintien des lignes pouvant être montés sur la plaque de base.

Les éléments de maintien des lignes comportent respectivement une tête pour acceuillir, au moins, une ligne de transport d'énergie, ainsi qu'un premier genre de pied conçu pour s'engager fixement dans lesdits trous.

Aussi le mérite de la demanderesse est-il de proposer un système de fixation de lignes, assurant un cheminement des lignes dans des conditions optimales.

Un autre but de l'invention est un système de fixation de lignes permettant de diminuer ou de supprimer les dégradations, les échauffements individuels et mutuels ainsi que les perturbations électromagnétiques.

Conformément à l'invention, le système de fixation de lignes, notamment électriques ou optiques, est constitué d'un support comportant des perforations, lesdites perforations étant susceptibles:
- de coopérer deux à deux avec des moyens de fixation de l'une des lignes de manière à maintenir ladite ligne sur ledit support selon un cheminement prédéterminé, et
- de recevoir des moyens de séparation desdites lignes de manière à empêcher tout contact entre lignes.

L'invention a de plus pour objet un système de fixation de lignes satisfaisant à l'une des caractéristiques suivantes:
- les perforations sont octogonales,
- les moyens de fixation sont des colliers,
- le support est une tôle en aluminium,
- les moyens de séparation desdites lignes sont des tiges,
- le séparateur de lignes se compose d'une tige dont l'extrémité susceptible d'être insérée dans lesdites perforations dudit support est de forme générale cônique
- l'extrémité de la tige susceptible d'être insérée dans les perforations du support est constituée d'un premier cône et d'un second cône, le premier cône étant directement solidaire de la tige et les premier et second cônes se faisant face,
- les bases de chacun des cônes sont disposées en vis-à-vis et maintenues sans contact d'un écart correspondant à la valeur de l'épaisseur dudit support de manière à permettre son insertion entre les bases des deux cônes, et
- la base du second cône est de préférence de diamètre moindre que la base du premier cône de manière à faciliter l'insertion du support entre les bases des deux cônes.

L'invention a également pour objet un procédé de fixation de lignes, caractérisé en ce qu'au moins une ligne est maintenu au moyen de moyens de fixation, selon un cheminement prédéterminé, sur un support comportant des perforations octogonales, lesdites perforations octogonales étant susceptibles de coopérer deux à deux avec lesdits moyens de fixation, et en ce que lesdites lignes sont maintenus sans contact entre elles au moyen de moyens de séparation, lesdits moyens de séparation étant susceptibles d'être insérés dans lesdites perforations octogonales.

Un avantage du système de fixation de lignes selon l'invention est d'être une solution simple, efficace et peu coûteuse ne présentant pas les inconvénients mentionnés ci-dessus des sytèmes de l'art antérieur.

Un autre avantage du système de fixation de lignes selon l'invention est de garantir un intervalle entre lignes durable et de permettre un positionnement et un guidage sur les chemins de câbles.

Un autre avantage du système de fixation de lignes selon l'invention est qu'il assure le bridage des lignes selon quatre axes distincts.

Un autre avantage du système de fixation de lignes selon l'invention est la possibilité de séparer les lignes par catégories de tensions et de signaux.

Un autre avantage du système de fixation de lignes selon l'invention est de garantir la dissipation thermique due à l'effet joule.

D'autres buts, caractéristiques et avantages de l'invention apparaîtront à la lecture de la description du mode de réalisation préféré du système de fixation de lignes, description faite en liaison avec les dessins dans lesquels:
- la figure 1 est une vue en perspective du système de fixation de lignes conforme à l'invention et
- la figure 2 montre un séparateur de lignes du système de fixation de lignes de l'invention.

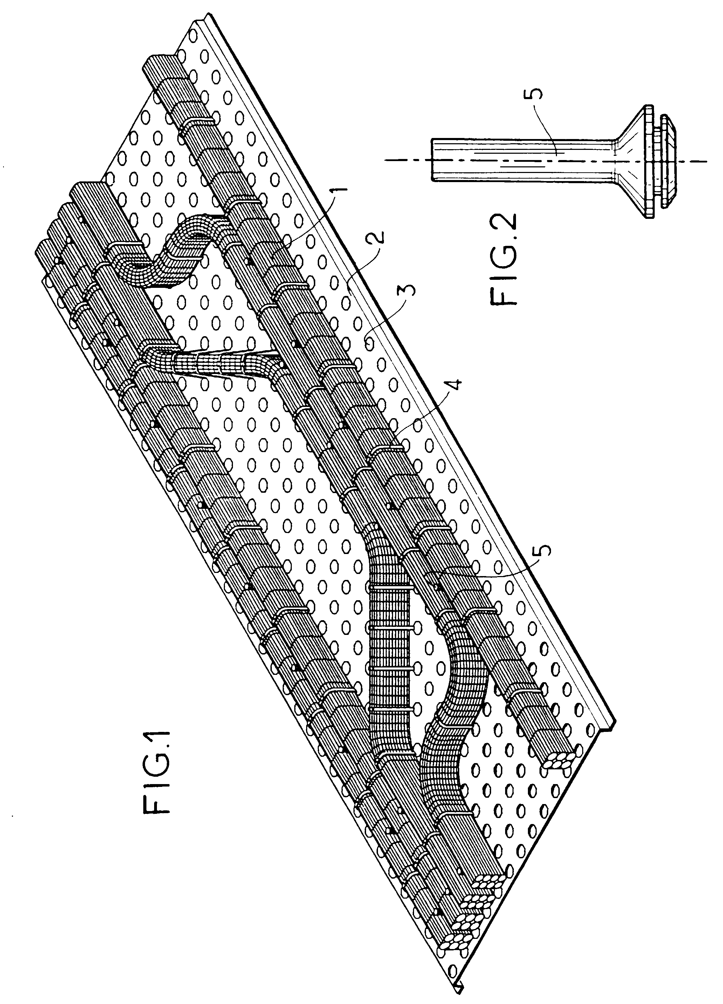

La figure 1 est une vue en perspective du système de fixation de lignes conforme à l'invention.

Le système de fixation de lignes 1, notamment électriques ou optiques, est constitué d'un support 2 comportant des perforations 3.

Les perforations sont de préférence des perforations octogonales mais peuvent également être des perforations circulaires ou de forme générale autre.

Les perforations sont susceptibles de coopérer deux à deux avec des moyens de fixation 4 de l'une des lignes de manière à maintenir la ligne sur le support selon un cheminement prédéterminé.

Les perforations sont également susceptibles de recevoir des moyens de séparation 5 des lignes de manière à empêcher tout contact entre lignes.

A titre d'exemple, les moyens de fixation 4 sont des colliers.

Le support 2 est par exemple une tôle en aluminium.

Les moyens de séparation 5 des lignes sont par exemple des tiges disposées entre deux lignes.

La figure 2 montre un séparateur 5 de lignes du système de fixation de lignes de l'invention.

Selon ce mode de réalisation préféré, le séparateur 5 de lignes se compose d'une tige dont l'extrémité susceptible d'être insérée dans les perforations 3 du support 2 est de forme générale cônique.

L'extrémité de la tige susceptible d'être insérée dans les perforations du support est constituée d'un premier cône et d'un second cône, le premier cône étant directement solidaire de la tige et les premier et second cônes se faisant face.

Les bases de chacun des cônes sont disposées en vis-à-vis et maintenues sans contact d'un écart correspondant à la valeur de l'épaisseur du support 2 de manière à permettre son insertion entre les bases des deux cônes.

La base du second cône est de préférence de diamètre moindre que la base du premier cône de manière à faciliter l'insertion du support entre les bases des deux cônes.

L'invention porte également sur un procédé de fixation de lignes.

Le procédé est tel qu'au moins une ligne est maintenue au moyen de moyens de fixation 4, selon un cheminement prédéterminé, sur un support comportant des perforations 3.

Les perforations sont susceptibles de coopérer deux à deux avec les moyens de fixation 4, et les lignes sont maintenus sans contact entre elles au moyen de moyens de séparation 5.

Les moyens de séparation sont susceptibles d'être insérés dans les perforations.

Conformément à l'invention, le procédé consiste donc à interposer, sans outillage particulier, une pièce dans une perforation de manière à assurer son maintien mécanique.

La mise en place de cette pièce est réalisée manuellement.

La forme et le matériau de cette pièce sont tels qu'ils ne détériorent pas l'isolant des lignes.

## Revendications

1. Système de fixation de lignes (1), notamment électriques ou optiques, constitué d'un support (2) comportant des perforations (3), lesdites perforations étant susceptibles:
- de coopérer deux à deux avec des moyens de fixation (4) de l'une des lignes de manière à maintenir ladite ligne sur ledit support selon un cheminement prédéterminé, et
- de recevoir des moyens de séparation (5) desdites lignes de manière à empêcher tout contact entre lignes.

2. Système selon la revendication 1, dans lequel les perforations sont octogonales.

3. Système selon la revendication 1, dans lequel les moyens de fixation (4) sont des colliers.

4. Système selon la revendication 1, dans lequel le support (2) est une tôle en aluminium.

5. Système selon la revendication 4, dans lequel les moyens de séparation (5) desdites lignes sont des tiges.

6. Système selon l'une quelconque des revendications 1 ou 4, dans lequel le séparateur (5) de lignes se compose d'une tige dont l'extrémité susceptible d'être insérée dans lesdites perforations (3) dudit support (2) est de forme générale cônique.

7. Système selon la revendication 6, dans lequel l'extrémité de la tige susceptible d'être insérée dans les perforations du support est constituée d'un premier cône et d'un second cône, le premier cône étant directement solidaire de la tige et les premier et second cônes se faisant face.

8. Système selon la revendication 7, dans lequel les bases de chacun des cônes sont disposées en vis-à-vis et maintenues sans contact d'un écart correspondant à la valeur de l'épaisseur dudit support (2) de manière à permettre son insertion entre les bases des deux cônes.

9. Système selon la revendication 8, dans lequel la base du second cône est de préférence de diamètre moindre que la base du premier cône de manière à faciliter l'insertion du support entre les bases des deux cônes.

10. Procédé de fixation de lignes, caractérisé en ce qu'au moins une ligne est maintenu au moyen de moyens de fixation (4), selon un cheminement prédéterminé, sur un support comportant des perforations (3), lesdites perforations étant susceptibles de coopérer deux à deux avec lesdits moyens de fixation (4), et en ce que lesdites lignes sont maintenus sans contact entre elles au moyen de moyens de séparation (5), lesdits moyens de séparation étant susceptibles d'être insérés dans lesdites perforations.

## Patentansprüche

1. System zur Befestigung von Leitungen (1), insbesondere elektrischen oder optischen, das aus einem Träger (2) besteht, der Perforationen (3) aufweist, wobei die Perforationen geeignet sind:
- paarweise mit Befestigungsmitteln (4) einer der Leitungen zusammenzuarbeiten, um die Leitung entlang einer vorbestimmten Führung auf dem Träger zu halten, und
- Mittel (5) zum Trennen der Leitungen aufzunehmen, um jeden Kontakt zwischen Leitungen zu verhindern.

2. System nach Anspruch 1, bei dem die Perforationen achteckig sind.

3. System nach Anspruch 1, bei dem die Befestigungsmittel (4) Ringflansche sind.

4. System nach Anspruch 1, bei dem der Träger (2) ein Aluminiumblech ist.

5. System nach Anspruch 4, bei dem die Mittel (5) zum Trennen der Leitungen Stangen sind.

6. System nach einem der Ansprüche 1 oder 4, bei dem der Leitungstrenner (5) aus einer Stange besteht, deren Ende, das geeignet ist, in die Perforationen (3) des Trägers (2) eingesetzt zu werden, eine konische allgemeine Form hat.

7. System nach Anspruch 6, bei dem das Ende der Stange, das geeignet ist, in die Perforationen des Trägers eingesetzt zu werden, aus einem ersten und einen zweiten Kegel besteht, wobei der erste Kegel direkt mit der Stange fest verbunden ist und die ersten und zweiten Kegel einander zugekehrt sind.

8. System nach Anspruch 7, bei dem die Basen jedes der Kegel einander gegenüber angeordnet sind und ohne Kontakt in einem Abstand festgehalten werden, der dem Wert der Dicke des Trägers (2) entspricht, um sein Einfügen zwischen die Basen der beiden Kegel zu gestatten.

9. System nach Anspruch 8, bei dem die Basis des zweiten Kegels vorzugsweise einen geringeren Durchmesser als die Basis des ersten Kegels hat, um das Einfügen des Trägers zwischen die Basen der beiden Kegel zu erleichtern.

10. Verfahren zur Befestigung von Leitungen, dadurch gekennzeichnet, daß wenigstens eine Leitung mittels Befestigungsmitteln (4) entlang einer vorbestimmten Führung auf einem Träger gehalten wird, der Perforationen (3) aufweist, wobei die Perforationen geeignet sind, paarweise mit den Befestigungsmitteln (4) zusammenzuarbeiten, und daß die Leitungen mittels Mitteln (5) zum Trennen ohne Kontakt untereinander gehalten werden, wobei die Mittel zum Trennen geeignet sind, in diese Perforation eingesetzt zu werden.

## Claims

1. A system for fixing lines (1), in particular electrical or optical lines, the system comprising a support (2) having perforations (3), which perforations are suitable:
for co-operating in pairs with fixing means (4) for fixing one of the lines in such a manner as to hold said line on said support on a predetermined path; and
for receiving separator means (5) for separating said lines in such a manner as to prevent any contact between lines.

2. A system according to claim 1, in which the perforations are octagonal.

3. A system according to claim 1, in which the fixing means (4) are clamping collars.

4. A system according to claim 1, in which the support (2) is made of aluminum sheet.

5. A system according to claim 4, in which the separator means (5) for separating said lines are pegs.

6. A system according to claim 1 or 4, in which the line separator (5) comprises a peg whose end suitable for insertion in said perforations (3) of said support (2) is generally conical in shape.

7. A system according to claim 6, in which the end of the peg suitable for being inserted in the perforations of the support is constituted by a first cone and a second cone, the first cone being directly integral with the peg and the first and second cones facing each other.

8. A system according to claim 7, in which the bases of the cones are disposed facing each other and are held apart by a distance corresponding to the thickness of said support (2) so as to enable the support to be inserted between the bases of the two cones.

9. A system according to claim 8, in which the base of the second cone is preferably of smaller diameter than the base of the first cone so as to facilitate insertion of the support between the bases of the two cones.

10. A method of fixing lines, characterized in that at least one line is held by fixing means (4) on a predetermined path against a support that includes perforations (3), said perforations being suitable for co-operating in pairs with said fixing means (4), and in that said lines are kept apart from one another by separator means (5), said separator means being suitable for insertion in said perforations.
